# EUROPEAN PATENT SPECIFICATION

(11) **EP 1 779 725 B1**
(45) Date of publication and mention of the grant of the patent: **08.10.2008**
(21) Application number: 06076913.0
(22) Date of filing: 22.06.2000
(51) Int. Cl.: A01N 25/34, C08J 5/06, C08J 11/06, B29B 15/08

(54) **Texturized cellulosic and lignocellulosic materials and compositions and composites made therefrom**
Texturierte Materialen aus Zellulose und Lignozellulose und damit hergestellte Zusammensetzungen und Verbundwerkstoffe
Matériaux et compositions cellulosiques et lignocellulosiques texturés; compositions et composites tirés de ces materiaux et compositions

(30) Priority: 22.06.1999 US 337580; 22.06.1999 US 338209
(43) Date of publication of application: 02.05.2007
(62) Divisional of application: 00941650.4
(73) Proprietor: Xyleco, Inc., Brookline, MA 02445 (US)
(72) Inventor: Medoff, Marshall, Brookline, MA 02445 (US); Lagace, Arthur, Newtonville, MA 02460 (US)
(74) Representative: Charig, Raymond Julian

(56) References cited:
- WO-A-00/29183
- WO-A-97/06942
- US-A- 3 697 364
- US-A- 4 244 847
- US-A- 4 791 020
- US-A- 5 331 087
- PATENT ABSTRACTS OF JAPAN vol. 012, no. 242 (C-510), 8 July 1988 (1988-07-08) & JP 63 033448 A (NIPPON DENSO CO LTD;OTHERS: 01), 13 February 1988 (1988-02-13)

## Description

### Background of the Invention

The invention relates to texturized cellulosic or lignocellulosic materials (e.g., texturized poly-coated paper) and compositions and composites made from such texturized materials.

Cellulosic and lignocellulosic materials are produced, processed, and used in large quantities in a number of applications. For example, paper coated with a polymer (i.e., poly-coated paper) is used to make a variety of food containers, including individual-serving size juice cartons and boxes for frozen foods. Once used, these cellulosic and lignocellulosic materials are usually discarded. As a result, there is an ever-increasing amount of waste cellulosic and lignocellulosic material.

Japanese patent application no. 63033448 discloses a composition comprising a polyolefin, vegetable fiber of fibrillated cellulose and a specific amount of a nucleating agent, preferably aluminum monohydroxy-di-p-t-butyl benzoate, dibenzylidene sorbitol, silica, talc, etc.

US 3697364 discloses a discontinuous cellulose-reinforced elastomer. The vulcanised elastomer has dispersed in the elastomer matrix discontinuous cellulose fibre.

WO 00/29183 relates to a granulate regenerative raw materials suitable for injection moulding. The granulate is widely variable with respect to its mechanical and physical properties.

US 4244847 discloses a fibrated admix or polymer. The admix is defined by mixing a partitioning agent and, optionally, plasticizers or adhesives with a dry defiberized material. The admix is dispersed in an elastomer to yield a cured fibre-elastomer composite having improved physical characteristics for products such as hose, tyres or power transmission belts.

US 4791020 describes composites made from cellulose fibres dispersed in a matrix of polyethylene and an isocyanate and bonded thereto during subsequent extrusion and moulding. The isocyanate improves adhesion between the cellulose fibres and the polyethylene. The improved adhesion results in improved tensile properties in the composite.

WO 97/06942 discloses a process for producing profiled materials, in particular for door and window production. Thermoplastic cuttings and additives made of vegetable fibres are mixed together and thermally plasticised. The thermoplastic solution is shaped, rested and cooled and thus hardened.

US 5331087 discloses a method for reprocessing thermoplast-coated packing materials and thermoplast material for further processing. The material is comminuted, washed, further comminuted and separated into a fibrous fraction and a thermoplast foil fraction. The thermoplast is then regranulated for recycling and the fibrous component is used in the production of corrugated board raw paper.

### Summary of the Invention

In general, the invention features texturized cellulosic or lignocellulosic materials (e.g., texturized poly-coated paper) and compositions and composites made therefrom.

In one embodiment, the invention features a process for preparing a texturized fibrous material. The process involves shearing a cellulosic or lignocellulosic material having internal fibers (e.g., flax, hemp, cotton, jute, rags, finished or unfinished paper, poly-coated paper, paper products, or by-products of paper manufacturing such as pulp board, or synthetic cellulosic or lignocellulosic materials such as rayon), to the extent that the internal fibers are substantially exposed, resulting in texturized fibrous material.

The cellulosic or lignocellulosic material can be, for example, a woven material such as a woven fabric, or a non-woven material such as paper or bathroom tissue. The exposed fibers of the texturized fibrous material can have a length/diameter (L/D) ratio of at least about 5 (e.g., at least about 5, 10, 25, 50, or more). For example, at least about 50% of the fibers can have L/D ratios of this magnitude.

In another embodiment, the invention features a texturized fibrous material that includes a cellulosic or lignocellulosic material (e.g., poly-coated paper) having internal fibers, where the cellulosic or lignocellulosic material is sheared to the extent that the internal fibers are substantially exposed.

The texturized fibrous material can, for example, be incorporated into (e.g., associated with, blended with, adjacent to, surrounded by, or within) a structure or carrier (e.g., a netting, a membrane, a flotation device, a bag, a shell, or a biodegradable substance). Optionally, the structure or carrier may itself be made from a texturized fibrous material (e.g., a texturized fibrous material of the invention), or of a composition or composite of a texturized fibrous material.

The texturized fibrous material can have a bulk density less than about 0.5 grams per cubic centimetre (g/cm³), or even less than about 0.2 g/cm³.

Compositions that include the texturized fibrous materials described above, together with a chemical or chemical formulation (e.g., a pharmaceutical such as an antibiotic or contraceptive, optionally with an excipient; an agricultural compound such as a fertilizer, herbicide, or pesticide; or a formulation that includes enzymes) are also within the scope of the invention, as are compositions that include the texturized fibrous materials and other liquid or solid ingredients (e.g., particulate, powdered, or granulated solids such as plant seed, foodstuffs, or bacteria).

Composites that include thermoplastic resin and the texturized fibrous materials are also contemplated. The resin can be, for example, polyethylene, polypropylene, polystyrene, polycarbonate, polybutylene, a thermoplastic polyester, a polyether, a thermoplastic polyurethane, polyvinylchloride, or a polyamide, or a combination of two or more resins.

In some cases, at least about 5% by weight (e. g., 5%, 10%, 25%, 50%, 75%, 90%, 95%, 99%, or about 100%) of the fibrous material included in the composites is texturized.

The composite may include, for example, about 30% to about 70% by weight resin and about 30% to about 70% by weight texturized fibrous material, although proportions outside of these ranges may also be used. The composites can be quite strong, in some cases having a flexural strength of at least about 6,000 to 10,000 psi.

The composites can also include inorganic additives such as calcium carbonate, graphite, asbestos, wollastonite, mica, glass, fiber glass, chalk, talc, silica, ceramic, ground construction waste, tire rubber powder, carbon fibers, or metal fibers (e.g., stainless steel or aluminum).

The inorganic additives can represent about 0.5% to about 20% of the total weight of the composite.

The composite can be in the form of, for example, a pallet (e.g., an injection molded pallet), pipes, panels, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, films, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, filament, cloth, plaques, trays, hangers, servers, pools, insulation, caskets, bookcovers, clothes, canes, crutches, and other construction, agricultural, material handling, transportation, automotive, industrial, environmental, naval, electrical, electronic, recreational, medical, textile, and consumer products. The composites can also be in the form of a fiber, filament, or film.

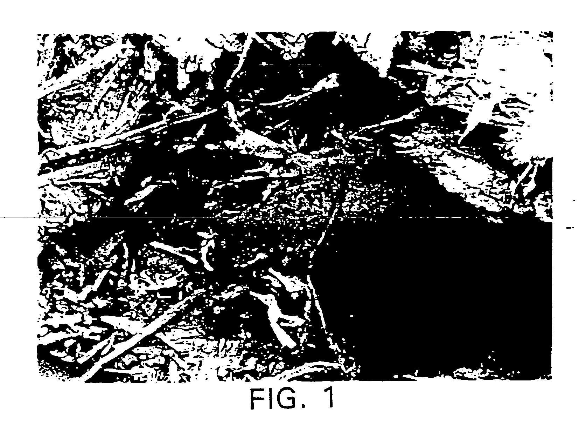

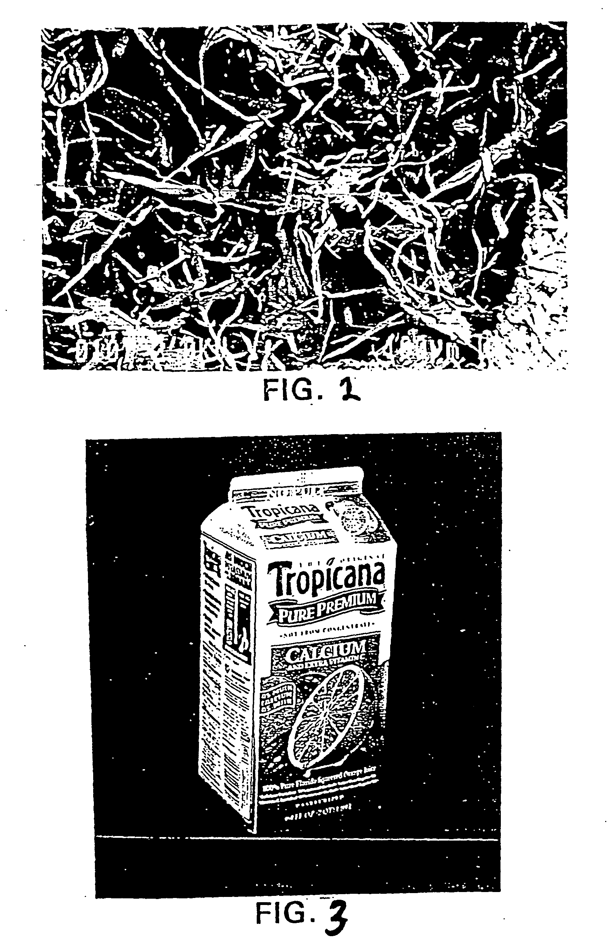

The terms "texturized cellulosic or lignocellulosic material" and "texturized fibrous material" as used herein, mean that the cellulosic or lignocellulosic material has been sheared to the extent that its internal fibers are substantially exposed. At least about 50%, more preferably at least about 70%, of these fibers have a length/diameter (L/D) ratio of at least 5, more preferably at least 25, or at least 50. An example of texturized cellulosic material (i.e., texturized newsprint) is shown in Fig. 1. An example of texturized poly-coated paper is shown in Fig. 2.

The texturized fibrous materials of the invention have properties that render them useful for various applications. For example, the texturized fibrous materials have absorbent properties, which can be exploited, for example, for pollution control. The fibers are generally biodegradable, making them suitable, for example, for drug or chemical delivery (e.g., in the treatment of humans, animals, or in agricultural applications). The texturized fibrous materials can also be used to reinforce polymeric resins.

Those composites that include texturized fibrous material and resin are strong, light-weight, and inexpensive. The raw materials used to make the composites are available as virgin or recycled materials; for example, they may include discarded containers composed of resins, and waste cellulosic or lignocellulosic fiber (e.g., discarded containers composed of poly-coated paper).

Poly-coated paper can be difficult to recycle because the paper and the polymer layers generally cannot be separated. In the present invention, both the paper and the polymer portions are utilized, so there is no need to separate the two. Poly-coated paper including one or more layers of aluminum can similarly be used. The invention thus helps to recycle discarded post-consumer containers, while at the same time producing useful products.

Other features and advantages of the invention will be apparent from the following detailed description, and from the claims.

### Brief Description of the Drawing

Fig. 1 is a photograph of a texturized newspaper, magnified fifty times.
Fig. 2 is a photograph of texturized poly-coated paper, magnified fifty times.
Fig. 3 is a photograph of a half-gallon polyboard juice carton.
Fig. 4 is a photograph of shredded half-gallon polyboard juice cartons.
Fig. 5 is a photograph of texturized fibrous material prepared by shearing the shredded half-gallon polyboard juice cartons of Fig. 4.

### Detailed Description of the Invention

Examples of cellulosic raw materials include paper and paper products such as newsprint and effluent from paper manufacture, and poly-coated paper. Examples of lignocellulosic raw materials include wood, wood fibers, and wood-related materials, as well as materials derived from kenaf, grasses, rice hulls, bagasse, cotton, jute, other stem plants (e.g., hemp, flax, bamboo; both bast and core fibers), leaf plants (e.g., sisal, abaca), and agricultural fibers (e.g., cereal straw, corn cobs, rice hulls, and coconut hair). Aside from virgin raw materials, post-consumer, industrial (e.g., offal), and processing waste (e.g., effluent) can also be used as fiber sources.

Poly-coated paper is available in a variety of forms. For example, whole sheets of virgin poly-coated paper can be purchased from International Paper, New York. Alternatively, virgin waste poly-coated paper (e.g., edge trimmings, surplus, misprinted stock) can be obtained from International Paper or other paper manufacturers. Used poly-coated paper, in the form of discarded food and beverage containers, can be gathered from various sources, including waste and recycling streams. Poly-coated paper can be made of a polymer (e.g., polyethylene) and paper, and, in some cases, one or more layers of aluminum. Poly-coated paper that includes one or more layers of aluminum foil is commonly used for airtight liquid storage. Used, waste, or scrap poly-coated paper (e.g., post-consumer waste, industrial offal) can also be purchased from brokers of this material.

### Preparation of Texturized Fibrous Material

If scrap cellulosic or lignocellulosic materials are used, they should be clean and dry. The raw material can be texturized using any one of a number of mechanical means, or combinations thereof. One method of texturizing includes first cutting the cellulosic or lignocellulosic material into 1/4- to 1/2-inch pieces, if necessary, using a standard cutting apparatus. Counter-rotating screw shredders and segmented rotating screw shredders such as those manufactured by Munson (Utica, NY) can also be used, as can a standard document shredder as found in many offices.

The cellulosic or lignocellulosic material is then sheared with a rotary cutter, such as the one manufactured by Sprout, Waldron Companies, as described in Perry's Chem. Eng. Handbook, 6th Ed., at 8-29 (1984). Although other settings can be used, the spacing between the rotating knives and bed knives of the rotary cutter is typically set to 0.020" or less, and blade rotation is set to 750 rpm or more. The rotary cutter can be cooled to 100°C or lower during the process, for example, using a water jacket.

The texturized material is passed through a discharge screen. Larger screens (e.g., up to 6 mm) can be used in large-scale production. The cellulosic or lignocellulosic feedstock is generally kept in contact with the blades of the rotary cutter until the fibers are pulled apart; smaller screens (e.g., 2 mm mesh) provide longer residence times and more complete texturization, but can result in lower length/diameter (L/D) aspect ratios. A vacuum drawer can be attached to the screen to maximize and maintain fiber length/diameter aspect ratio.

The texturized fibrous materials can be directly stored in sealed bags or may be dried at approximately 105°C for 4-18 hours (e.g., until the moisture content is less than about 0.5%) immediately before use. Fig. 1 is an SEM photograph of texturized newspaper.

### Uses of Texturized Fibrous Material

Texturized fibrous materials and compositions and composites of such fibers with other chemicals and chemical formulations can be prepared to take advantage of the material's properties. The materials can be used to absorb chemicals, for example, potentially absorbing many times their own weight. Thus, the materials could, for instance, be used to absorb spilled oil, or for clean-up of environmental pollution, for example, in water, in the air, or on land. Similarly, the material's absorbent properties, together with its biodegradability, also make them useful for delivery of chemicals or chemical formulations. For example, the materials can be treated with solutions of enzymes or pharmaceuticals such as antibiotics, nutrients, or contraceptives, and any necessary excipients, for drug delivery (e.g., for treatment of humans or animals, or for use as or in animal feed and/or bedding), as well as with solutions of fertilizers, herbicides, or pesticides. The materials can optionally be chemically treated to enhance a specific absorption property. For example, the materials can be treated with silanes to render them lipophilic.

Compositions including texturized materials combined with liquids or particulate, powdered, or granulated solids can also be prepared. For example, texturized fibrous materials can be blended with seeds (i.e., with or without treatment with a solution of fertilizer, pesticides, etc.), foodstuffs, or bacteria (e.g., bacteria that digest toxins). The ratio of fibrous materials to the other components of the compositions will depend on the nature of the components and readily be adjusted for a specific product application.

In some cases, it may be advantageous to associate the texturized fibrous materials, or compositions or composites of such materials, with a structure or carrier such as a netting, a membrane, a flotation device, a bag, a shell, or a biodegradable substance. Optionally, the structure of carrier may itself be made of a texturized fibrous material (e.g., a material of the invention), or a composition or composite thereof.

### Composites of Texturized Fibrous Material and Resin

Texturized fibrous materials can also be combined with resins to form strong, lightweight composites. Materials that have been treated with chemicals or chemical formulations, as described above, can similarly be combined with biodegradable or non-biodegradable resins to form composites, allowing the introduction of, for example, hydrophilic substances into otherwise hydrophobic polymer matrices. Alternatively, the composites including texturized fibrous materials and resin can be treated with chemicals or chemical formulations.

The texturized cellulosic or lignocellulosic material provides the composite with strength. The composite may include from about 10% to about 90%, for example from about 30% to about 70%, of the texturized cellulosic or lignocellulosic material by weight. Combinations of texturized fibrous materials can also be used (e.g., texturized poly-coated paper blended with texturized wood-related materials or other cellulosic or lignocellulosic fibers).

The resin encapsulates the texturized cellulosic or lignocellulosic material in the composites, and helps control the shape of the composites. The resin also transfers external loads to the fibrous materials and protects the fiber from environmental and structural damage. Composites can include, for example, about 10% to about 90%, more preferably about 30% to about 70%, by weight, of the resin.

Examples of resins that are suitably combined with texturized fibers include polyethylene (including, e.g., low density polyethylene and high density polyethylene), polypropylene, polystyrene, polycarbonate, polybutylene, thermoplastic polyesters (e.g., PET), polyethers, thermoplastic polyurethane, PVC, polyamides (e.g., nylon) and other resins. It is preferred that the resins have a low melt flow index. Preferred resins include polyethylene and polypropylene with melt flow indices of less than 3 g/10 min, and more preferably less than 1 g/10 min.

The resins can be purchased as virgin material, or obtained as waste materials, and can be purchased in pelletized or granulated form. One source of waste resin is used polyethylene milk bottles. If surface moisture is present on the pelletized or granulated resin, however, it should be dried before use.

The composites can also include coupling agents. The coupling agents help to bond the hydrophilic fibers to the hydrophobic resins. Examples of coupling agents include maleic anhydride modified polyethylenes, such those in the FUSABOND® (available from Dupont, Delaware) and POLYBOND® (available from Uniroyal Chemical, Connecticut) series. One suitable coupling agent is a maleic anhydride modified high density polyethylene such as FUSABOND® MB 100D.

The composites can also contain additives known to those in the art of compounding, such as plasticizers, lubricants, antioxidants, opacificers, heat stabilizers, colorants, flame retardants, biocides, impact modifiers, photostabilizers, and antistatic agents.

The composites can also include inorganic additives such as calcium carbonate, graphite, asbestos, wollastonite, mica, glass, fiber glass, chalk, silica, talc, ceramic, ground construction waste, tire rubber powder, carbon fibers, or metal fibers (e.g., aluminum, stainless steel). When such additives are included, they are typically present in quantities of from about 0.5% up to about 20-30% by weight. For example, submicron calcium carbonate can be added to the composites of texturized fibrous material and resin to improve impact modification characteristics or to enhance composite strength.

### Preparation of Compositions

Compositions containing the texturized cellulosic or lignocellulosic materials and chemicals, chemical formulations, or other solids can be prepared, for example, in various immersion, spraying, or blending apparatuses, including, but not limited to, ribbon blenders, cone blenders, double cone blenders, and Patterson-Kelly "V" blenders.

For example, a composition containing 90% by weight texturized cellulosic or lignocellulosic material and 10% by weight ammonium phosphate or sodium bicarbonate can be prepared in a cone blender to create a fire-retardant material for absorbing oil.

### Preparation of Composites of Texturized Fiber and Resin

Composites of texturized fibrous material and resin can be prepared as follows. A standard rubber/plastic compounding 2-roll mill is heated to 325-400°F. The resin (usually in the form of pellets or granules) is added to the heated roll mill. After about 5 to 10 minutes, the coupling agent is added to the roll mill. After another five minutes, the texturized cellulosic or lignocellulosic material is added to the molten resin/coupling agent mixture. The texturized material is added over a period of about 10 minutes.

The composite is removed from the roll mill, cut into sheets and allowed to cool to room temperature. It is then compression molded into plaques using standard compression molding techniques.

Alternatively, a mixer, such as a Banbury internal mixer, is charged with the ingredients. The ingredients are mixed, while the temperature is maintained at less than about 190°C. The mixture can then be compression molded.

In another embodiment, the ingredients can be mixed in an extruder mixer, such as a twin-screw extruder equipped with co-rotating screws. The resin and the coupling agent are introduced at the extruder feed throat; the texturized cellulosic or lignocellulosic material or materials are introduced about 1/3 of the way down the length of the extruder into the molten resin. The internal temperature of the extruder is maintained at less than about 190°C. At the output, the composite can be, for example, pelletized by cold strand cutting.

Alternatively, the mixture can first be prepared in a mixer, then transferred to an extruder.

In another embodiment, the composite can be formed into filaments for knitting, warping, weaving, braiding, or in the manufacture of non-wovens. In a further embodiment, the composite can be made into a film.

### Properties of the Composites of Texturized Fibrous Material and Resin

The resulting composites include a network of fibers, encapsulated within a resin matrix. The fibers form a lattice network, which provides the composite with strength. Since the cellulosic or lignocellulosic material is texturized, the amount of surface area available to bond to the resin is increased, in comparison to composites prepared with un-texturized cellulosic or lignocellulosic material. The resin binds to the surfaces of the exposed fibers, creating an intimate blend of the fiber network and the resin matrix. The intimate blending of the fibers and the resin matrix further strengthens the composites.

### Uses of the Composites of Texturized Fibrous Material and Resin

The resin/fibrous material composites can be used in a number of applications. The composites are strong and light weight; they can be used, for example, as wood substitutes. The resin coating renders the composites water-resistant, so they may be used in outdoor applications. For example, the composites may be used to make pallets, which are often stored outdoors for extended periods of time, wine staves, rowboats, furniture, skis, and oars. Many other uses are contemplated, including panels, pipes, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, films, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, filament, cloth, plaques, trays, hangers, servers, pools, insulation, caskets, bookcovers, clothes, canes, crutches, and other construction, agricultural, material handling, transportation, automotive, industrial, environmental, naval, electrical, electronic, recreational, medical, textile, and consumer products. Numerous other applications are also envisioned. The composites may also be used, for example, as the base or carcass for a veneer product. Moreover, the composites can be, for example, surface treated, grooved, milled, shaped, imprinted, textured, compressed, punched, or colored. The surface of the composites can be smooth or rough.

The following examples illustrate certain embodiments and aspects of the present invention and not to be construed as limiting the scope thereof.

### Examples

### Example 1

A 1500 pound skid of virgin, half-gallon juice cartons made of polycoated white kraft board was obtained from International Paper. One such carton is shown in Fig. 3. Each carton was folded flat.

The cartons were fed into a 3 hp Flinch Baugh shredder at a rate of approximately 15 to 20 pounds per hour. The shredder was equipped with two rotary blades, each 12" in length, two fixed blades, and a 0.3" discharge screen. The gap between the rotary and fixed blades was 0.10".

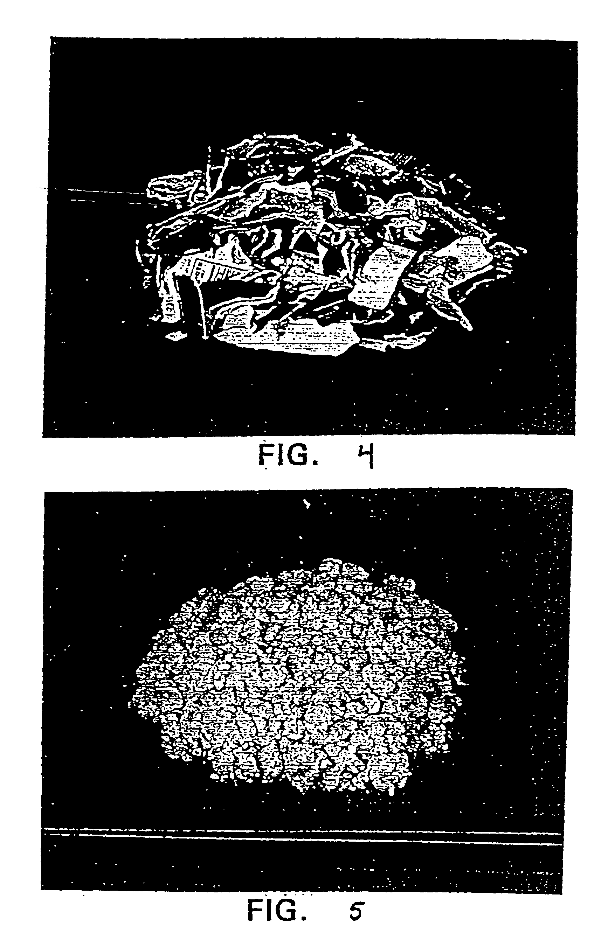

A sample of the output from the shredder, consisting primarily of confetti-like pieces, about 0.1" to 0.5" in width and about 0.25" to 1" in length, is shown in Fig. 4. The shredder output was fed into a Thomas Wiley Mill Model 2D5 rotary cutter. The rotary cutter had four rotary blades, four fixed blades, and a 2 mm discharge screen. Each blade was approximately 2" long. The blade gap was set at 0.020".

The rotary cutter sheared the confetti-like pieces across the knife edges, tearing the pieces apart and releasing a finely texturized fiber at a rate of about one pound per hour. The fiber had an average minimum L/D ratio of between five and 100 or more. The bulk density of the texturized fiber was on the order of 0.1 g/cc. A sample of texturized fiber is shown in Fig. 5 at normal magnification, and in Fig. 2 at fifty-fold magnification.

### Example 2

Composites of texturized fiber and resin were prepared as follows. A standard rubber/plastic compounding 2-roll mill was heated to 325-400°F. The resin (usually in the form of pellets or granules) was added to the heated roll mill. After about 5 to 10 minutes, the resin banded on the rolls (i.e., it melted and fused on the rolls). The coupling agent was then added to the roll mill. After another five minutes, the texturized cellulosic or lignocellulosic material was added to the molten resin/coupling agent mixture. The cellulosic or lignocellulosic fiber was added over a period of about 10 minutes.

The composite was then removed from the roll mill, cut into sheets, and allowed to cool to room temperature. Batches of about 80 g each were compression molded into 6" x 6" x 1/8" plaques using standard compression molding techniques.

One composite contained the following ingredients:

**Composition No. 1**

| Ingredient | Amount(g) |
|---|---|
| High density polyethylene¹ | 160 |
| Old newspaper ² | 240 |
| Coupling agent³ | 8 |

| | |
|---|---|
| ¹Marlex 16007 ² Texturized using rotary cutter with 2 mm mesh ³FUSABOND® 100D | |

The plaques were machined into appropriate test specimens and tested according to the procedures outlined in the method specified. Three different specimens were tested for each property, and the mean value for each test was calculated. The properties of Composition No. 1 are as follows:

| | |
|---|---|
| Flexural strength (10³ psi) | 9.81 (ASTM D790) |
| Flexural modulus (10⁵ psi) | 6.27 (ASTM D790) |

A second composite contains the following ingredients:

**Composition No. 2**

| Ingredient | Amount (g) |
|---|---|
| High density polyethylene¹ | 160 |
| Old magazines² | 240 |
| Coupling agent³ | 8 |

| | |
|---|---|
| ¹Marlex 16007 ² Texturized using rotary cutter with 2 mm mesh ³ FUSABOND® 100D | |

The properties of Composition No. 2 are as follows:

| | |
|---|---|
| Flexural strength (10³ psi) | 9.06 (ASTM D790) |
| Flexural modulus (10⁵ psi) | 6.78 (ASTM D790) |

A third composite contains the following ingredients:

**Composition No. 3**

| Ingredient | Amount (g) |
|---|---|
| HDPE¹ | 160 |
| Fiber paper² | 216 |
| 3.1 mm texturized kenaf | 24 |
| Coupling agent³ | 8 |

| | |
|---|---|
| ¹ Marlex 16007 ² Texturized using rotary cutter with 2 mm mesh ³ FUSABOND® 100D | |

The properties of Composition No. 3 are as follows:

| | |
|---|---|
| Flexural strength (10³ psi) | 11.4 (ASTM D790) |
| Flexural modulus (10⁵ psi) | 6.41 (ASTM D790) |

A fourth composite contains the following ingredients:

**Composition No. 4**

| Ingredient | Amount (g) |
|---|---|
| SUPERFLEX® CaCO₃ | 33 |
| Fiber^{2,4} | 67 |
| HDPE (w/3% compatibilizer)^{1,3} | 100 |

| | |
|---|---|
| ¹ Marlex 16007 ² Texturized using rotary cutter with 2 mm mesh ³ FUSABOND® 100D ⁴ Virgin polycoated milk cartons | |

The properties of Composition No. 4 are as follows:

| | |
|---|---|
| Flexural strength (10⁵ psi) | 8.29 (ASTM D790) |
| Ultimate elongation (%) | <5 (ASTM D638) |
| Flexural modulus (10⁵ psi) | 10.1 (ASTM D790) |
| Notch Izod (ft-lb/in) | 1.39 (ASTM D256-97) |

A fifth composite contains the following ingredients:

**Composition No. 5**

| Ingredient | Amount (parts) |
|---|---|
| SUPERFLEX® CaCO₃ | 22 |
| Fiber^{2,4} | 67 |
| HDPE (w/3% compatibilizer)^{1,3} | 100 |

| | |
|---|---|
| ¹Marlex 16007 ² Texturized using rotary cutter with 2 mm mesh ³ FUSABOND® 100D ⁴ Virgin polycoated milk cartons | |

The properties of Composition No. 5 are as follows:

| | |
|---|---|
| Flexural strength (10⁵ psi) | 8.38 (ASTM D790) |
| Ultimate elongation (%) | <5 (ASTM D638) |
| Flexural modulus (10⁵ psi) | 9.86 (ASTM D790) |
| Notch lzod (ft-lb/in) | 1.37 (ASTM D256-97) |

A sixth composite contains the following ingredients:

**Composition No. 6**

| Ingredient | Amount (parts) |
|---|---|
| ULTRAFLEX® CaCO₃ | 33 |
| Fiber^{2,4} | 67 |
| HDPE/compatibilizer^{1,3} | 100 |

| | |
|---|---|
| ¹ Marlex 16007 ² Texturized using rotary cutter with 2 mm mesh ³ FUSABOND® 100D ⁴ Virgin polycoated milk cartons | |

The properties of Composition No. 6 are as follows:

| | |
|---|---|
| Flexural strength (10⁵ psi) | 7.43 (ASTM D790) |
| Ultimate elongation (%) | <5 (ASTM D638) |
| Flexural modulus (10⁵ psi) | 11.6 (ASTM D790) |
| Notch Izod (ft-lb/in) | 1.27 (ASTM D256-97) |

A seventh composite contains the following ingredients:

**Composition No. 7**

| Ingredient | Amount (pbw) |
|---|---|
| HDPE (w/3% compatibilizer)^{3,5} | 60 |
| Kraftboard² | 40 |

| | |
|---|---|
| ¹Marlex 16007 ² Texturized using rotary cutter with 2 mm mesh ³FUSABOND® 100D ⁴ Virgin polycoated milk cartons ⁵ HDPE with melt-flow index <1 | |

The properties of Composition No. 7 are as follows:

| | |
|---|---|
| Flexural Strength (10⁵ psi) | 7.79 (ASTM D790) |
| Ultimate elongation (%) | <5 (ASTM D638) |
| Flexural Modulus (10⁵ psi) | 7.19 (ASTM D790) |

An eighth composite contains the following ingredients:

**Composition No. 8**

| Ingredient | Amount (g) |
|---|---|
| High density polyethylene¹¹ | 160 |
| Poly-coated paper² | 240 |
| Coupling agent³ | 8 |

| | |
|---|---|
| ¹Marlex 6007, melt flow index 0.65 g/10 min, commercially available from Phillips ² Texturized using rotary cutter with 2 mm mesh ³ POLYBOND® 3009, commercially available from Uniroyal Chemical | |

The properties of Composition No. 8 are as follows:

| | |
|---|---|
| Tensile modulus (10⁵ psi) | 8.63 (ASTM D638) |
| Tensile strength at break (psi) | 6820 (ASTM D638) |
| Ultimate elongation (%) | <5 (ASTM D638) |
| Flexural Strength (psi) | 12,200 (ASTM D790) |
| Flexural modulus (10⁵ psi) | 6.61 (ASTM D790) |

A ninth composite contains the following ingredients:

**Composition No. 9**

| Ingredient | Amount (g) |
|---|---|
| High density polyethylene¹ | 160 |
| Poly-coated paper² | 240 |
| Coupling agent³ | 8 |

| | |
|---|---|
| ¹ Scrapped milk jugs, melt flow index approximately 0.8 g/10 min ² Texturized using rotary cutter with 2 mm mesh ³ POLYBOND® 3009 | |

The properties of Composition No. 9 are as follows:

| | |
|---|---|
| Tensile modulus (10⁵ psi) | 7.38 (ASTM D638) |
| Tensile strength at break (psi) | 6500 (ASTM D638) |
| Ultimate elongation (%) | <5 (ASTM D638) |
| Flexural Strength (psi) | 11,900 (ASTM D790) |
| Flexural modulus (10⁵ psi) | 6.50 (ASTM D790) |

A tenth composite contains the following ingredients:

**Composition No. 10**

| Ingredient | Amount (g) |
|---|---|
| High density polyethylene¹ | 160 |
| Poly-coated paper² | 240 |
| Coupling agent³ | 8 |

| | |
|---|---|
| ¹ Scrap milk jugs, melt flow index approximately 0.8 g/10 min ² Texturized using rotary cutter with 2 mm mesh ³ FUSABOND® MB 100D, commercially available from DuPont | |

The properties of Composition No. 10 are as follows:

| | |
|---|---|
| Tensile modulus (10⁵ psi) | 7.08 (ASTM D638) |
| Tensile strength at break (psi) | 6480 (ASTM D638) |
| Ultimate elongation (%) | <5 (ASTM D638) |
| Flexural Strength (psi) | 10,200 (ASTM D790) |
| Flexural modulus (10⁵ psi) | 5.73 (ASTM D790) |

An eleventh composite contains the following ingredients:

**Composition No. 11**

| Ingredient | Amount (g) |
|---|---|
| High density polyethylene¹ | 160 |
| Poly-coated paper² | 240 |
| Coupling agent³ | 8 |

| | |
|---|---|
| ¹ Marlex 6007, melt flow index 0.65 g/10 min ² texturized using rotary cutter with 2 mm mesh ³ FUSABOND® MB 100D | |

The properties of Composition No. 11 are as follows:

| | |
|---|---|
| Tensile modulus (10⁵ psi) | 7.17 (ASTM D638) |
| Tensile strength at break (psi) | 6860 (ASTM D638) |
| Ultimate elongation (%) | <5 (ASTM D638) |
| Flexural Strength (psi) | 12,200 (ASTM D790) |
| Flexural modulus (10⁵ psi) | 7.50 (ASTM D790) |

Other embodiments are within the claims.

## Claims

1. A composition comprising a texturized fibrous material comprising a cellulosic or lignocellulosic material that has been sheared to the extent that its internal fibers are substantially exposed; and
a chemical or chemical formulation.

2. The composition of Claim 1, wherein the composition is combined with a solid and/or liquid.

3. The composition of Claim 2, wherein the solid is a granulate, particulate or a powder.

4. The composition of Claim 2, wherein the solid comprises plant seeds

5. The composition of Claim 2, wherein the solid comprises a foodstuff.

6. The composition of Claim 2, wherein the solid comprises a bacterium.

7. The composition of Claim 1, wherein the chemical or chemical formulation comprises a pharmaceutical compound.

8. The composition of Claim 1, wherein the chemical or chemical formulation comprises an agricultural compound.

9. The composition of Claim 1, wherein the chemical or chemical formulation comprises a fertilizer.

10. The composition of Claim 1, wherein the chemical or chemical formulation comprises a pesticide.

11. The composition of Claim 1, wherein the chemical or chemical formulation comprises a herbicide.

12. The composition of Claim 1, wherein the chemical or chemical formulation comprises an enzyme.

13. The composition of Claim 1, wherein the chemical or chemical formulation comprises a contraceptive.

14. The composition of Claim 1, wherein the chemical or chemical formulation comprises a nutrient.

15. The composition of Claim 1, wherein the chemical or chemical formulation comprises an antibiotic.

16. The composition of Claim 1, wherein the cellulosic or lignocellulosic material is selected from the group consisting of paper, paper products, byproducts of paper manufacture,-newsprint, effluent from paper manufacture, wood, wood fibers, wood-related material, kenaf, grasses, rice hulls, bagasse, cotton, jute, hemp, flax, bamboo bast fibers, bamboo core fibers, leaf plants, sisal, abaca, agricultural fibers, cereal straw, corn cobs, coconut hair, offal, rags, and mixtures thereof.

17. The composition of Claim 1, wherein the cellulosic or lignocellulosic material is pulp board.

18. The composition of Claim 1, wherein the cellulosic or lignocellulosic material is a synthetic material.

19. The composition of Claim 1, wherein the cellulosic or lignocellulosic material is a non-woven material.

20. The composition of Claim 1, wherein at least about 50% of the fibers have a length/diameter ratio of at least 5.

21. The composition of Claim 1, wherein at least about 50% of the fibers have a length/diameter ratio of at least 25.

22. The composition of Claim 1, wherein the texturized fibrous material has a bulk density less than about 0.2 g/cm³.

23. The composition of Claim 1, wherein the texturized fibrous material has a bulk density less than about 0.5 g/cm³.

24. A method comprising:
shearing a cellulosic or lignocellulosic material to the extent that its internal fibers are substantially exposed to provide a texturized fibrous material; and
combining the texturized fibrous material with a chemical or chemical formulation.

## Patentansprüche

1. Zusammensetzung, die ein texturiertes Fasermaterial, das ein Cellulose- oder ligninhaltiges Cellulosematerial, das in einem derartigen Ausmaß, dass die unternen Fasern im wesentlichen freigelegt sind, geschert ist, und
eine Chemikalie oder chemische Formulierung umfasst.

2. Zusammensetzung nach Anspruch 1, wobei die Zusammensetzung mit einem Feststoff und/oder einer Flüssigkeit kombiniert ist.

3. Zusammensetzung nach Anspruch 2, wobei der Feststoff ein Granulat, teilchenförmiger Stoff oder ein Pulver ist.

4. Zusammensetzung nach Anspruch 2, wobei der Feststoff Planzensamen umfasst.

5. Zusammensetzung nach Anspruch 2, wobei der Feststoff ein Nahrungsmittel umfasst.

6. Zusammensetzung nach Anspruch 2, wobei der Feststoff ein Bakterium umfasst.

7. Zusammensetzung nach Anspruch 1, wobei die Chemikalie oder chemische Formulierung eine pharmazeutische Verbindung umfasst.

8. Zusammensetzung nach Anspruch 1, wobei die Chemikalie oder chemische Formulierung eine Agrochemikalie umfasst.

9. Zusammensetzung nach Anspruch 1, wobei die Chemikalie oder chemische Formylierung ein Düngemittel umfasst.

10. Zusammensetzung nach Anspruch 1, wobei die Chemikalie oder chemische Formulierung ein Pestizid umfasst.

11. Zusammensetzung nach Anspruch 1, wobei die Chemikalie oder chemische Formulierung ein Herbizid umfasst.

12. Zusammensetzung nach Anspruch 1, wobei die Chemikalie oder chemische Formulierung ein Enzym umfasst.

13. Zusammensetzung nach Anspruch 1, wobei die Chemikalie oder chemische Formulierung ein Kontrazeptivum umfasst.

14. Zusammensetzung nach Anspruch 1, wobei die Chemikalie oder chemische Formulierung einen Nährstoff umfasst.

15. Zusammensetzung nach Anspruch 1, wobei die Chemikalie oder chemische Formulierung ein Antibiotikum umfasst.

16. Zusammensetzung nach Anspruch 1, wobei das Cellulose- oder ligninhaltige Cellulosematerial aus der Gruppe von Papier, Papierprodukten, Nebenprodukten der Papierherstellung, Zeitungen, Abfall der Papierherstellung, Holz, Holzfasern, mit Holz in Verbindung stehenden Materialien, Kenaf, Gläsern, Reisspelzen, Bagasse, Baumwolle, Jute, Hanf, Flachs, Bambusbastfasern, Bambuskernfasern, Blattpflanzen, Sisal, Abaca, Agrofasern, Getreidestroh, Maiskolben, Kokoshaar, Abfall, Hadern und Gemischen derselben ausgewählt ist.

17. Zusammensetzung nach Anspruch 1, wobei das Cellulose- oder ligninhaltige Cellulosematerial Zellstoffpappe ist.

18. Zusammensetzung nach Anspruch 1, wobei das Cellulose- oder ligninhaltige Cellulosematerial ein synthetisches Material ist.

19. Zusammensetzung nach Anspruch 1, wobei das Cellulose- oder ligninhaltige Cellulosematerial ein nichtgewebtes Mmaterial ist.

20. Zusammensetzung nach Anspruch 1, wobei mindestens etwa 50 % der Fasern ein Länge/Durchmesser-Verhältnis von mindestens 5 aufweisen.

21. Zusammensetzung nach Anspruch 1, wobei mindestens etwa 50 % der Fasern ein Länge/Durchmesser-Verhältnis von mindestens 25 aufweisen.

22. Zusammensetzung nach Anspruch 1, wobei das texturierte Fasermaterial eine Schüttdichte von weniger als etwa 0,2 g/cm³ aufweist.

23. Zusammensetzung nach Anspruch 1, wobei das texturierte Fasermaterial eine Schüttdichte von weniger als etwa 0,5 g/cm³ aufweist.

24. Verfahren, umfassend:
das Scheren eines Cellulose- oder ligninhaltigen Cellulosematerials in einem derartigen Ausmaß, dass dessen interne Fasern im wesentlichen freigelegt sind, unter Bildung eines texturierten Fasermaterials, und das Kombinieren des texturierten Fasermaterials mit einer Chemikalie oder chemischen Formulierung.

## Revendications

1. Composition comprenant un matériau fibreux texturé comprenant un matériau cellulosique ou lignocellulosique qui a été cisaillé au point que ses fibres internes sont substantiellement exposées ; et
un produit ou une formulation chimique.

2. Composition selon la revendication 1, dans laquelle la composition est combinée avec un solide et/ou un liquide.

3. Composition selon la revendication 2, dans laquelle le solide est un granule, une particule ou une poudre.

4. Composition selon la revendication 2, dans laquelle le solide comprend des graines végétales.

5. Composition selon la revendication 2, dans laquelle le solide comprend un aliment.

6. Composition selon la revendication 2, dans laquelle le solide comprend une bactérie.

7. Composition selon la revendication 1, dans laquelle le produit ou la formulation chimique comprend un composé pharmaceutique.

8. Composition selon la revendication 1, dans laquelle le produit ou la formulation chimique comprend un composé agricole.

9. Composition selon la revendication 1, dans laquelle le produit ou la formulation chimique comprend un engrais.

10. Composition selon la revendication 1, dans laquelle le produit ou la formulation chimique comprend un pesticide.

11. Composition selon la revendication 1, dans laquelle le produit ou la formulation chimique comprend un herbicide.

12. Composition selon la revendication 1, dans laquelle le produit ou la formulation chimique comprend une enzyme.

13. Composition selon la revendication 1, dans laquelle le produit ou la formulation chimique comprend un contraceptif.

14. Composition selon la revendication 1, dans laquelle le produit ou la formulation chimique comprend un nutriment.

15. Composition selon la revendication 1, dans laquelle le produit ou la formulation chimique comprend un antibiotique.

16. Composition selon la revendication 1, dans laquelle le matériau cellulosique ou lignocellulosique est choisi parmi le groupe constitué par le papier, les produits papetiers, les sous-produits de la fabrication du papier, le papier journal, les effluents de la fabrication du papier, le bois, les fibres de bois, les matériaux de type ligneux, le kénaf, les graminées, les balles de riz, la bagasse, le coton, le jute, le chanvre, le lin, les fibres du liber de bambou, les fibres du coeur de bambou, les plantes feuillues, le sisal, le chanvre de Manille, les fibres agricoles, la paille de céréales, les rafles de maïs, les fibres de coco, les résidus, les chiffons et les mélanges de ceux-ci.

17. Composition selon la revendication 1, dans laquelle le matériau cellulosique ou lignocellulosique est du carton-bois.

18. Composition selon la revendication 1, dans laquelle le matériau cellulosique ou lignocellulosique est un matériau synthétique.

19. Composition selon la revendication 1, dans laquelle le matériau cellulosique ou, lignocellulosique est un matériau non tissé.

20. Composition selon la revendication 1, dans laquelle au moins 50 % environ des fibres ont un rapport longueur/diamètre d'au moins 5.

21. Composition selon la revendication 1, dans laquelle au moins 50 % environ des fibres ont un rapport longueur/diamètre d'au moins 25.

22. Composition selon la revendication 1, dans laquelle le matériau fibreux texturé a une densité de masse inférieure à environ 0,2 g/cm³.

23. Composition selon la revendication 1, dans laquelle le matériau fibreux texturé a une densité de masse inférieure à environ 0,5 g/cm³.

24. Procédé comprenant les étapes consistant à :
cisailler un matériau cellulosique ou lignocellulosique au point que ses fibres internes sont substantiellement exposées pour fournir un matériau fibreux texturé ; et
combiner le matériau fibreux texturé avec un produit ou une formulation chimique.
